# FASCICULE DE BREVET EUROPEEN

(11) **EP 2 103 920 B1**
(45) Date de publication et mention de la délivrance du brevet: **12.02.2014**
(21) Numéro de dépôt: 09154758.8
(22) Date de dépôt: 10.03.2009
(51) Int. Cl.: G01L 5/22, G01L 3/10, B62D 5/00

(54) **Dispositif de détection de couple pour direction de véhicule automobile**
Vorrichtung zur Erkennung des Drehmoments für die Lenkung eines Kraftfahrzeugs
Torque detection device for automobile steering system

(30) Priorité: 18.03.2008 FR 0801473
(43) Date de publication de la demande: 23.09.2009
(73) Titulaire: Jtekt Europe, 69540 Irigny (FR)
(72) Inventeur: Plataret, Nicolas, 69008, LYON (FR); Rey, Laurent, 69100, VILLEURBANNE (FR)
(74) Mandataire: Maureau, Philippe

(56) Documents cités:
- EP-A- 1 870 684
- EP-A2- 1 241 074
- EP-A2- 1 840 545
- DE-A1- 10 010 838
- FR-A- 2 845 473
- JP-A- 2005 156 468
- KR-A- 20020 074 045
- STRASSER F: "MOLDING METAL INSERTS INTO PLASTIC PARTS" PLASTICS ENGINEERING, SOCIETY OF PLASTICS ENGINEERS,INC. GREENWICH, CONN, US, vol. 36, no. 10, 1 octobre 1980 (1980-10-01), pages 17-22, XP002034382 ISSN: 0091-9578

## Description

La présente invention concerne, de façon générale, les systèmes de direction des véhicules automobiles. Elle se rapporte, plus particulièrement, à un dispositif de détection de couple pour une direction de véhicule automobile, ce dispositif étant destiné à mesurer le couple exercé par le conducteur du véhicule sur le volant de conduite, en vue de l'assistance électrique ou hydraulique de la direction.

Dans les systèmes de direction assistée, le couple ou l'effort d'assistance fourni pour soulager le conducteur du véhicule est asservi au couple exercé par le conducteur sur le volant de conduite, ce qui rend nécessaire la présence d'un capteur de couple au volant, à partir duquel est commandée l'intensité de l'action d'assistance. Parmi les capteurs de couple utilisables, les capteurs les plus habituels utilisent la variation d'angle d'une barre de torsion. Une catégorie plus particulière de dispositifs de détection de couple, utilisés notamment dans les systèmes de direction, comprend des capteurs fonctionnant sur un principe magnétique, tels que les capteurs décrits dans les documents de brevets FR 2 837 282 A1 (ou son équivalent US2003/167857 A1), FR 2 872 902 A1, US 2005/0126309 A1, US 6 988 422 B2 et EP 1870684 A1.

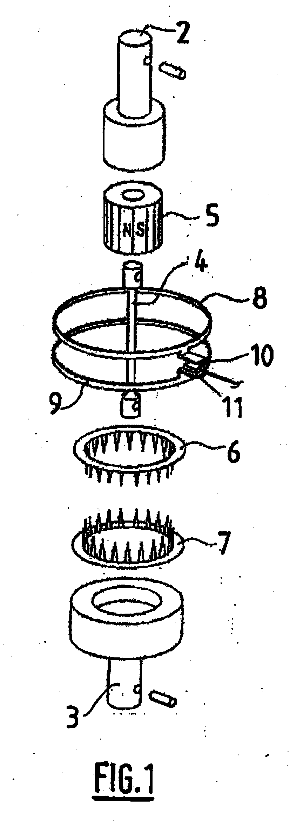

En se référant à la figure 1 du dessin schématique annexé, ce genre de capteur de couple est intercalé entre un arbre rotatif d'entrée 2 et un arbre rotatif de sortie 3, et il comprend cinq éléments principaux qui sont :
- une barre de torsion 4 reliant mécaniquement les extrémités coaxiales de l'arbre d'entrée 2 et de l'arbre de sortie 3 ;
- un ensemble d'aimants permanents 5 solidaire de l'extrémité de l'arbre d'entrée 2 ;
- une paire de culasses magnétiques 6 et 7 solidaire de l'extrémité de l'arbre de sortie 3 ;
- un support collecteur de flux magnétique, composé de deux bagues collectrices 8 et 9, surmoulées par un matériau plastique, de sorte que ces bagues collectrices 8,9 sont présentes sur la face intérieure de la masse surmoulée, et d'un bouclier de protection électromagnétique (ici non représenté) ;
- un capteur de flux magnétique, composé de deux capteurs à effet Hall 10 et 11 surmoulés par une matière thermoplastique et comprenant un bouclier de protection électromagnétique (ici non représenté).

Le support collecteur de flux, et le capteur de flux, sont des éléments fixes à monter dans le système de direction. Plus particulièrement, dans des systèmes de direction connus, le support collecteur de flux est placé directement dans l'un des carters en aluminium du système de direction. Le capteur de flux vient ensuite s'intégrer dans le support collecteur de flux, au moyen de formes complémentaires appropriées. Ces éléments sont ensuite rendus solidaires entre eux et avec le carter en aluminium au moyen d'une ou de plusieurs vis d'assemblage, et grâce à un ou des trous filetés réalisés préalablement ou non dans le carter, des joints assurant l'étanchéité de l'assemblage.

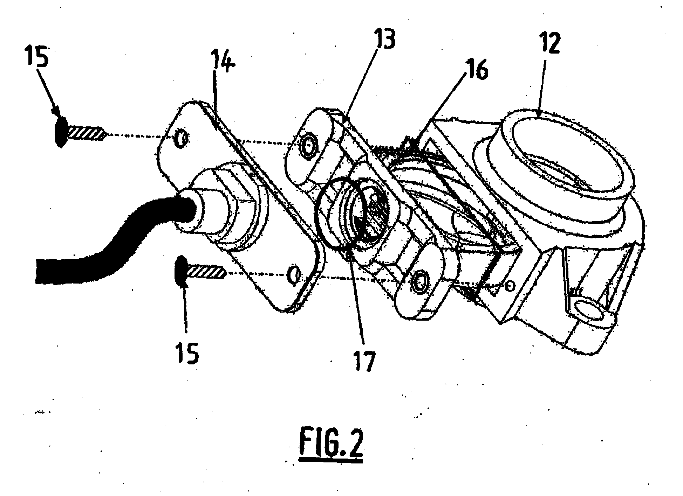

Un exemple d'un tel mode connu d'assemblage est illustré par la figure 2, sur laquelle :
- la référence 12 désigne le carter en aluminium ;
- la référence 13 désigne le support collecteur de flux ;
- la référence 14 désigne le support du capteur de flux ;
- les vis d'assemblage sont indiquées en 15 ; et
- les joints d'étanchéité intercalés sont respectivement désignés 16 et 17.

Les dispositifs existants de ce genre présentent l'inconvénient d'être délicats et longs à assembler, ce qui affecte la précision de l'assemblage et rend aussi la fonction « capteur de couple » coûteuse. En outre, l'efficacité des joints d'étanchéité n'étant pas parfaite, des infiltrations sont fréquemment constatées, entraînant elles-mêmes de coûteuses reprises.

La présente invention vise à remédier à ces inconvénients, et elle donc pour but de fournir un dispositif de détection de couple, du genre ici concerné, dont l'assemblage est simplifié donc rendu plus économique, tout en améliorant la précision de montage ainsi que l'étanchéité.

Ce problème est résolu, dans un dispositif de détection de couple pour une direction de véhicule automobile, le dispositif comprenant une barre de torsion ou équivalent reliant un arbre d'entrée à un arbre de sortie, un ensemble d'aimants permanents solidaire de l'arbre d'entrée, une paire de culasses magnétiques solidaire de l'arbre de sortie, un support collecteur de flux avec intérieurement deux bagues collectrices qui est monté dans un carter du système de direction, et un capteur de flux magnétique monté sur le support collecteur, par le fait que le carter et le support collecteur de flux sont réalisés majoritairement en matière plastique et que le support collecteur de flux, comportant les bagues collectrices, est surmoulé dans le carter, les deux bagues collectrices étant présentes sur la face intérieure de la masse surmoulée, et une liaison mécanique entre le support collecteur surmoulé et le carter étant assurée de préférence par des formes complémentaires prévues sur l'intérieur du carter et sur la périphérie du support collecteur surmoulé.

Ainsi, l'idée à la base de l'invention consiste à réaliser, par surmoulage, un sous-ensemble « monobloc » comprenant à la fois l'un des carters du système de direction et le support collecteur de flux. La liaison mécanique entre le support collecteur de flux et le carter est assurée par des formes moulées appropriées, respectivement sur la face extérieure du support collecteur de flux et sur la face intérieure du carter.

On entend ici par « formes moulées appropriées » des formes en creux et/ou en relief, comprenant ou non des contre-dépouilles, et réalisées lors du surmoulage sur la périphérie ou face extérieure du support collecteur de flux, en particulier sur la partie surmoulant les bagues collectrices.

Plus particulièrement, la liaison mécanique entre le support collecteur de flux et le carter peut être assurée :
- par au moins une gouge en creux comprenant ou non des contre-dépouilles, réalisée sur tout ou partie de la périphérie du support collecteur ;
- ou par au moins une gouge en relief comprenant ou non des contre-dépouilles, ou une queue d'aronde, réalisée sur tout ou partie de la périphérie du support collecteur ;
- ou par moletage, simple ou croisé, réalisé sur tout ou partie de la périphérie du support collecteur.

Dans une autre forme de réalisation du dispositif de détection de couple objet de l'invention, le support collecteur de flux est obtenu en surmoulant directement les bagues collectrices par une matière plastique appropriée, lors de la fabrication du carter ; dans ce cas, le support collecteur de flux peut ne pas comporter de bouclier de protection électromagnétique.

On entend ici, par «matière plastique appropriée », un matériau synthétique ou composite mécaniquement robuste, stable dimensionnellement dans une plage de températures allant typiquement de -40°C à + 120°C, et résistant à l'environnement chimique d'un système de direction (huile, graisse, eau, salissures, brouillard salin, ...). Ces matières sont soit thermoplastiques, soit thermo-durcissables. Elles sont communément renforcées par des fibres de verre pour augmenter leur rigidité (module d'Young) et leur ténacité (résistance au choc Charpy). Il s'agit pour la plupart de thermoplastiques « hautes performances » présentant une bonne résistance mécanique à des températures élevées (température de déflexion sous charge).

Des exemples de matières thermoplastiques convenant à ce type d'application sont donnés dans le tableau ci-dessous.

| Matière | Module d'Young (GPa) mesuré à 20°C IS0 527-1 | Température de fléchissement sous charge (1,8 MPa) ISO 75-1 / -2 | Résistance au choc Charpy (kJ/m²) (+23°C) ISO 179 /1eU |
|---|---|---|---|
| PA66 GF 50 Polyamide «66» renforcé par 30% de fibre de verre | 17 | 250 | 95 |
| PA 46 GF 50 Polyamide «46» renforcé par 30% de fibre de verre | 17 | 295 | 100 |
| PA 6T/66 GF 50 Polyamide semi-aromatique renforcé par 50% de fibre de verre | 17 | 285 | 85 |
| PA66/6T GF 45 Polyphthalamide renforcé par 45% de fibre de verre | 17 | 287 | 93 |
| PPS GF 40 Poly phenylène sulphone renforcé par 40% de fibre de verre | 14 | 260 | 48 |

L'invention sera mieux comprise, et d'autres caractéristiques seront mises en évidence, à l'aide de la description qui suit, en référence au dessin schématique annexé représentant, à titre d'exemples, quelques formes d'exécution de ce dispositif de détection de couple pour direction de véhicule automobile.
Figure 1 (déjà mentionnée) est une vue en perspective éclatée d'un dispositif détecteur de couple existant ;
Figure 2 (déjà mentionnée) est une vue en perspective éclatée illustrant le mode d'assemblage actuel d'un tel dispositif détecteur de couple ;
Figure 3 est une vue en perspective d'un support collecteur de flux surmoulé selon l'invention, représenté seul ;
Figure 4 est une vue en coupe de l'ensemble monobloc formé par le carter et par le support collecteur de flux surmoulé ;
Figures 5, 6, 7 et 8 sont des vues en section illustrant, dans diverses variantes des formes de liaison moulées, le surmoulage des bagues collectrices du support collecteur de flux.

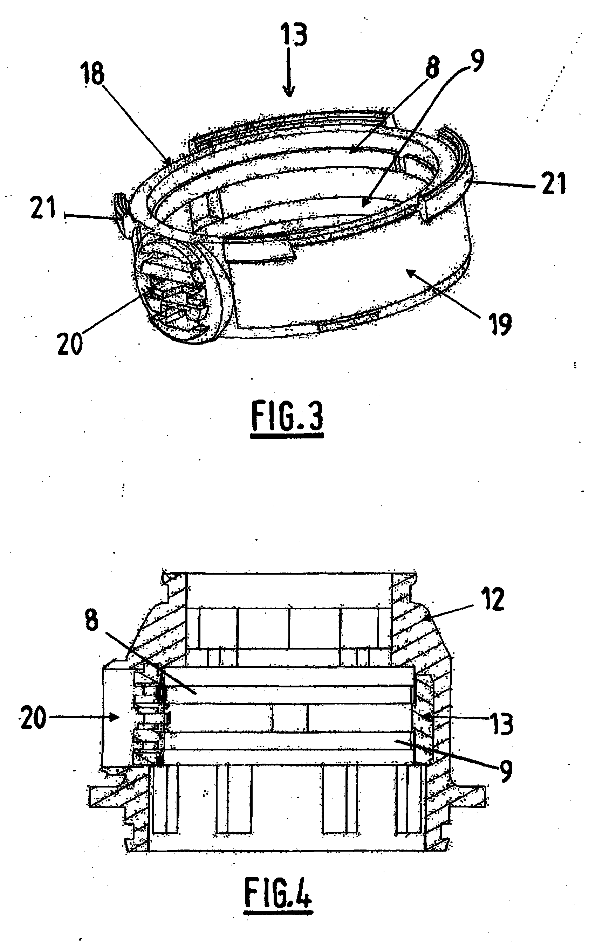

En se référant à la figure 3, le support collecteur de flux 13 comprend une masse surmoulée 18 de forme générale annulaire, deux bagues collectrices 8 et 9 présentes sur la face intérieure de la masse surmoulée 18, et un bouclier de protection électromagnétique 19 présent sur la face extérieure de la masse surmoulée 18. Dans une zone particulière de la périphérie du support collecteur 13, où le bouclier 19 est interrompu, est prévue une partie spécifique 20 destinée à l'adaptation du capteur de flux magnétique (ici non représenté).

Sur la périphérie du support collecteur de flux 13, plus particulièrement le long d'un bord du bouclier 19, sont formées des parties en relief 21 qui assurent la liaison mécanique avec le carter du système de direction qui entoure le support collecteur de flux 13.

La figure 4 montre le support collecteur de flux 13 placé à l'intérieur du carter 12. Le support collecteur de flux 13, comportant notamment les bagues collectrices 8 et 9, est surmoulé dans le carter 12, de manière à obtenir un ensemble monobloc tel que représenté, formé par le carter 12 et par le support collecteur de flux 13.

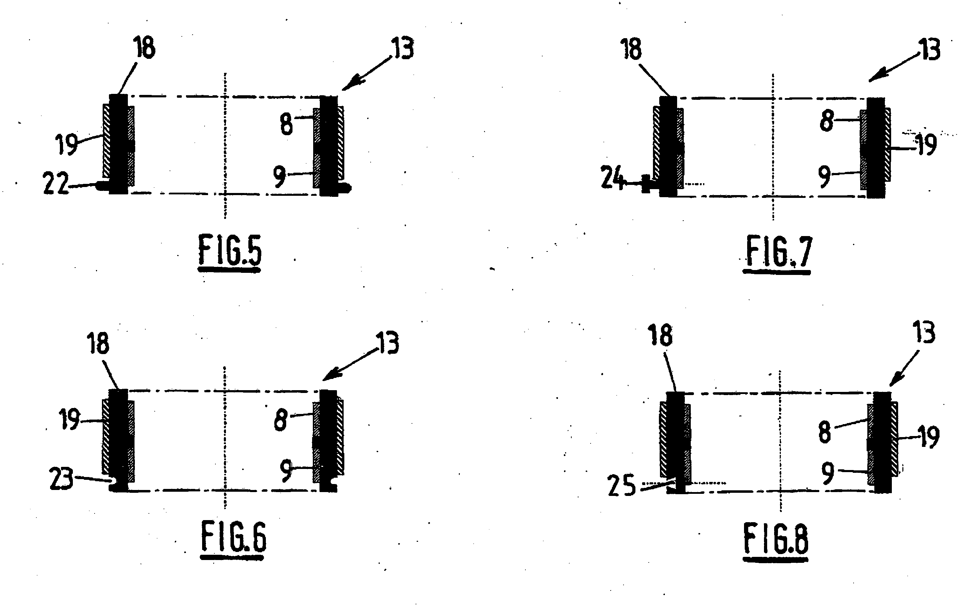

Les figures 5 à 8 montrent des exemples de formes moulées appropriées pour assurer la liaison mécanique entre le support collecteur de flux 13 et le carter 12, ces figures indiquant plus particulièrement les formes réalisées sur la périphérie du support collecteur de flux 13 :
- dans le cas de la figure 5, ces formes sont des gouges 22 en relief ;
- dans le cas de la figure 6, ces formes sont des gouges 23 en creux ;
- dans le cas de la figure 7, ces formes sont des plots 24 en relief, avec contre-dépouille (forme en « T ») ;
- dans le cas de la figure 8, ces formes sont des plots 25 en creux (forme en queue d'aronde).

Le carter 12 et le support collecteur de flux 13 sont réalisés avantageusement en une matière thermoplastique « haute température », choisie préférentiellement parmi le polysulfure de phénylène (PPS), le polyphtalamide (PPA) et le polyamide (PA).

L'on ne s'éloignerait pas du cadre de l'invention, telle que définie dans les revendications annexées :
- en réalisant le carter et le support collecteur de flux en d'autres matières plastiques, du moment que celles-ci soient appropriées pour l'utilisation concernée ;
- en modifiant les formes du carter et du support collecteur de flux, du moment que les parties situées dans la zone de liaison soient convenablement conformées, ces parties pouvant posséder des configurations très diverses ;
- en modifiant la structure ou même la conception des éléments du dispositif non concernés directement par l'invention, par exemple la barre de torsion, laquelle peut être remplacée par tout équivalent, tel qu'une pièce en matériau souple déformable élastiquement dans le sens cironférentiel, et reliant l'arbre d'entrée à l'arbre de sortie ;
- en utilisant tout procédé ou toute technologie de moulage pour les pièces concernées;
- en destinant un tel dispositif de détection de couple à une direction assistée pouvant être de tout type, en particulier hydraulique ou électrique.

## Revendications

1. Procédé d'assemblage d'un dispositif de détection de couple pour direction de véhicule automobile, le dispositif comprenant une barre de torsion (4) reliant un arbre d'entrée (2) à un arbre de sortie (3), un ensemble d'aimants permanents (5) solidaire de l'arbre d'entrée (2), une paire de culasses magnétiques (6 ,7) solidaire de l'arbre de sortie (3), un support collecteur de flux (13) avec deux bagues collectrices (8, 9) qui est monté dans un carter (12) du système de direction, et un capteur de flux magnétique (10,11) monté sur le support collecteur (13), dans lequel on réalise le carter (12) et le support collecteur de flux (13) majoritairement en matière plastique,
le support collecteur de flux (13) étant réalisé en surmoulant les deux bagues collectrices (8, 9) par une masse surmoulée (18) de telle manière que les deux bagues collectrices (8,9) sont présentes sur la face intérieure de ladite masse surmoulée (18), et en plaçant un bouclier de protection électromagnétique sur la face extérieure de ladite masse surmoulée (18),
et le support collecteur de flux (13), qui comporte les bagues collectrices (8,9) et le bouclier de protection électromagnétique (19), étant surmoulé dans le carter (12) en réalisant ledit carter (12) en matière plastique de manière à ce que ledit carter (12) entoure ledit support collecteur de flux (13), une liaison mécanique entre le support collecteur de flux (13) et le carter (12) étant assurée, de manière à obtenir, par surmoulage, un sous-ensemble monobloc formé par le carter (12) et par le support collecteur de flux (13) placé à l'intérieur dudit carter (12).

2. Procédé d'assemblage selon la revendication 1, **caractérisé en ce que** la liaison mécanique entre le support collecteur de flux (13) et le carter (12) est assurée par des formes en creux et/ou en relief (21 à 25), comprenant ou non des contre-dépouilles, et réalisées lors du surmoulage sur la périphérie ou face extérieure du support collecteur de flux (13), en particulier sur la partie (18) surmoulant les bagues collectrices (8,9).

3. Procédé d'assemblage selon la revendication 2 **caractérisé en ce que** les parties en relief (21) sont formées sur la périphérie du collecteur de flux (13) le long d'un bord du bouclier de protection électromagnétique (19).

4. Procédé d'assemblage selon la revendication 2, **caractérisé en ce que** la liaison mécanique entre le support collecteur de flux (13) et le carter (12) est assurée par au moins une gouge en creux (23) comprenant ou non des contre-dépouilles, réalisée sur tout ou partie de la périphérie du support collecteur (13).

5. Procédé d'assemblage selon la revendication 2, **caractérisé en ce que** la liaison mécanique entre le support collecteur de flux (13) et le carter (12) est assurée par au moins une gouge en relief (22) comprenant ou non des contre-dépouilles, ou une queue d'aronde (25), réalisée sur tout ou partie de la périphérie du support collecteur (13).

6. Procédé d'assemblage selon la revendication 2, **caractérisé en ce que** la liaison mécanique entre le support collecteur de flux (13) et le carter (12) est assurée par un moletage, simple ou croisé, réalisé sur tout ou partie de la périphérie du support collecteur (13).

7. Procédé d'assemblage selon l'une quelconque des revendications 1 à 6, **caractérisé en ce que** le carter (12) et le support collecteur de flux (13) sont réalisés en une matière thermoplastique « haute température », choisie préférentiellement parmi le polysulfure de phénylène (PPS), le polyphtalamide (PPA) et le polyamide (PA).

## Patentansprüche

1. Montageverfahren einer Vorrichtung zur Erkennung des Drehmoments für eine Lenkung eines Kraftfahrzeugs, wobei die Vorrichtung einen Drehstab (4), der eine Eingangswelle (2) mit einer Ausgangswelle (3) verbindet, eine Dauermagnetgruppe (5), die mit der Eingangswelle (2) verbunden ist, ein Paar Magnetbüchse (6 ,7), das mit der Ausgangswelle (3) verbunden ist, eine Magnetflusssammlerstütze (13) mit zwei Sammlerringen (8, 9), die in einem Gehäuse (12) des Lenksystems montiert ist, und einen Magnetflusssensor (10, 11), der auf der Sammlerstütze (13) montiert ist, umfasst, wobei das Gehäuse (12) und die Magnetflusssammlerstütze (13) mehrheitlich aus Kunststoff hergestellt sind,
wobei die Magnetflusssammlerstütze (13) durch Overmoulding der zwei Sammlerringe (8, 9) mit einer Overmoulding-Masse (18) derart hergestellt ist, dass die zwei Sammlerringe (8, 9) auf der Innenseite der Overmoulding-Masse (18) vorhanden sind, und durch Einsetzen eines elektromagnetischen Schutzschilds auf die Außenseite der Overmoulding-Masse (18),
und die Magnetflusssammlerstütze (13), die die Sammlerringe (8, 9) und den elektromagnetischen Schutzschild (19) aufweist, in dem Gehäuse (12) durch Herstellung des Gehäuses (12) aus Kunststoff derart überformt ist, dass das Gehäuse (12) die Magnetflusssammlerstütze (13) umgibt, wobei eine mechanische Verbindung zwischen der Magnetflusssammlerstütze (13) und dem Gehäuse (12) derart sichergestellt ist, dass durch Overmoulding eine Monoblock-Unterbaugruppe entsteht, die von dem Gehäuse (12) und von der Magnetflusssammlerstütze (13), die in dem Gehäuse (12) liegt, gebildet wird.

2. Montageverfahren nach Anspruch 1, **dadurch gekennzeichnet, dass** die mechanische Verbindung zwischen der Magnetflusssammlerstütze (13) und dem Gehäuse (12) durch Hohl- und/oder Reliefformen (21 bis 25) sichergestellt ist, die Gegenschrägen umfassen oder nicht und beim Overmoulding auf dem Umfang oder der Außenseite der Flusssammlerstütze (13) ausgebildet werden, insbesondere auf dem Teil (18), der die Sammlerringe (8, 9) überformt.

3. Montageverfahren nach Anspruch 2, **dadurch gekennzeichnet, dass** die Relief teile (21) auf dem Umfang der Magnetflusssammlerstütze (13) entlang eines Rands des elektromagnetischen Schutzschilds (19) ausgebildet sind.

4. Montageverfahren nach Anspruch 2, **dadurch gekennzeichnet, dass** die mechanische Verbindung zwischen der Magnetflusssammlerstütze (13) und dem Gehäuse (12) durch mindestens eine Hohlrinne (23) sichergestellt ist, die Gegenschrägen umfasst oder nicht und auf dem gesamten oder einem Teil des Umfangs der Sammlerstütze (13) ausgebildet ist.

5. Montageverfahren nach Anspruch 2, **dadurch gekennzeichnet, dass** die mechanische Verbindung zwischen der Magnetflusssammlerstütze (13) und dem Gehäuse (12) durch mindestens eine Reliefrinne (22) sichergestellt ist, die Gegenschrägen umfasst oder nicht, oder einen Schwalbenschwanz (25), die/der und auf dem gesamten oder einem Teil des Umfangs der Sammlerstütze (13) ausgebildet ist.

6. Montageverfahren nach Anspruch 2, **dadurch gekennzeichnet, dass** die mechanische Verbindung zwischen der Magnetflusssammlerstütze (13) und dem Gehäuse (12) durch eine einfache oder Kreuzrändelung sichergestellt ist, die auf dem gesamten oder einem Teil des Umfangs der Sammlerstütze (13) ausgebildet ist.

7. Montageverfahren nach einem der Ansprüche 1 bis 6, **dadurch gekennzeichnet, dass** das Gehäuse (12) und die Magnetflusssammlerstütze (13) aus einem thermoplastischen Hochtemperatur-Material hergestellt sind, das vorzugsweise aus dem Phenylpolysulfid (PPS), dem Polyphtalamid (PPA) und dem Polyamid (PA) ausgewählt ist.

## Claims

1. A method for assembling a torque detection device for a motor vehicle steering system, the device comprising a torsion bar (4) connecting an input shaft (2) to an output shaft (3), a set of permanent magnets (5) secured to the input shaft (2), a pair of magnetic yokes (6, 7) secured to the output shaft (3), a flux collector holder (13) with two collecting rings (8, 9) that is mounted in a casing (12) of the steering system, and a magnetic flow sensor (10, 11) mounted on the collector holder (13), wherein the casing (12) and the flux collector holder (13) are made primarily from plastic,
the flux collector holder (13) being made by overmolding the two collecting rings (8, 9) using an overmolded mass (18) such that the two collecting rings (8, 9) are present on the inner face of said overmolded mass (18), and by placing an electromagnetic protective shield on the outer face of said overmolded mass (18),
and the flux collector holder (13), which includes the collecting rings (8, 9) and the electromagnetic protective shield (19), being overmolded in the casing (12) by making the casing (12) from a plastic material such that said casing (12) surrounds said flux collector holder (13), a mechanical link between the flux collector holder (13) and the casing (12) being provided, so as to obtain a single-piece subassembly by overmolding, which is formed by the casing (12) and the flux collector holder (13) placed inside said casing (12).

2. The assembly method according to claim 1, **characterized in that** the mechanical link between the flux collector holder (13) and the casing (12) is provided by hollow and/or raised shapes (21 to 25), which may or may not comprise undercuts, and made during the overmolding on the periphery or outer surface of the flux collector holder (13), in particular on the part (18) overmolding the collecting rings (8, 9).

3. The assembly method according to claim 2, **characterized in that** the raised parts (21) are formed on the periphery of the flux collector (13) along one edge of the electromagnetic protective shield (19).

4. The assembly method according to claim 2, **characterized in that** the mechanical link between the flux collector holder (13) and the casing (12) is provided by at least one hollow gouge (23) that may or may not comprise undercuts, formed on all or part of the periphery of the collector holder (13).

5. The assembly method according to claim 2, **characterized in that** the mechanical link between the flux collector holder (13) and the casing (12) is provided by at least one raised gouge (22) that may or may not comprise undercuts, or a dovetail (25), produced on all or part of the periphery of the collector holder (13).

6. The assembly method according to claim 2, **characterized in that** the mechanical link between the flux collector holder (13) and the casing (12) is provided by a single or crossed knurling, done on all or part of the periphery of the collector holder (13).

7. The assembly method according to any one of claims 1 to 6, **characterized in that** the casing (12) and the flux collector holder (13) are made from a "high temperature" thermoplastic material, preferably chosen from among phenylene polysulfide (PPS), polyphthalamide (PPA) and polyamide (PA).
